(19) Europäisches Patentamt / European Patent Office / Office européen des brevets

(11) **EP 2 924 615 A1**

(12) **EUROPEAN PATENT APPLICATION**

(43) Date of publication:
**30.09.2015 Bulletin 2015/40**

(51) Int Cl.:
***G06K 15/02*** *(2006.01)*

(21) Application number: **15157151.0**

(22) Date of filing: **02.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **28.03.2014 JP 2014067345**

(71) Applicant: **Riso Kagaku Corporation Tokyo, 108-8385 (JP)**

(72) Inventor: **Kurose, Tsutomu Ibaraki 305-0818 (JP)**

(74) Representative: **Lucas, Brian Ronald Lucas & Co. 135 Westhall Road Warlingham, Surrey CR6 9HJ (GB)**

(54) **Image processing apparatus**

(57)     An image processing apparatus calculates a first data amount that is a data amount per page of a print job, and extracts images having a resolution that exceeds a printing resolution from among images included in the print job when the first data amount is greater than a threshold value. The image processing apparatus converts the resolution of the extracted images into the printing resolution, and calculates a second data amount that is a data amount per page of the print job after conversion into the printing resolution. The image processing apparatus causes a user to select an element from among printing speed and image quality when the second data amount is greater than a threshold value. The image processing apparatus reduces the resolutions of the images included in the print job when the selected element is the printing speed.

FIG. 2

**Description**

FIELD

The present invention relates to an image processing apparatus.

BACKGROUND

In recent years, resolutions of images to be handled have dramatically increased. Accordingly, a data amount per page of a print job has rapidly increased. As the data amount per page increases, a time needed for rasterization (hereinafter referred to as a "RIP (Raster Image Processor) process") significantly increases.
In other words, an increase in the data amount per page causes a reduction in throughput in the RIP process. As an example, in a print job including a large number of pages, such as business forms, productivity is greatly reduced when the throughput in the RIP process falls below a throughput of a printer engine.
An example of a solution to this problem is a method proposed in Patent Document 1. In the method proposed in Patent Document 1, when the RIP process performed on a page to be processed is not completed in time for a printing start timing of the page, an image on the page is compressed in order to reduce a time needed for the RIP process performed on the page.
Patent Document 1: Japanese Laid-Open Patent Publication No. 2010-277466

SUMMARY

However, in the method proposed in Patent Document 1, as an example, when the image to be compressed also exists on another page, the image looks different because resolutions differ, and a printing result that is not intended by a user may be obtained.
In view of the problem above, it is an object of the present invention to provide an image processing apparatus that is capable of improving productivity and prioritizing an element (e.g., printing speed or image quality) that a user desires to prioritize.
An image processing apparatus according to claim 1 includes first data amount calculating means (16b) for calculating a first data amount that is a data amount per page of a print job to be processed, first determining means (16a) for determining whether the first data amount calculated by the first data amount calculating means (16b) is less than or equal to a preset threshold value, extracting means (16f) for extracting images having a resolution that exceeds a printing resolution from among images included in the print job to be processed when the calculated first data amount is greater than the threshold value, first resolution converting means (16g) for converting the resolution of the images extracted by the extracting means (16f) into the printing resolution, second data amount calculating means (16b) for calculating a second data amount that is a data amount per page of the print job after conversion into the printing resolution, second determining means (16a) for determining whether the second data amount calculated by the second data amount calculating means (16b) is less than or equal to the threshold value, selecting means (16h) for causing a user to select an element that the user desires to prioritize from among printing speed and image quality when it is determined by the second determining means (16a) that the calculated second data amount is greater than the threshold value, and second resolution converting means (16i, 16g) for reducing the resolutions of the images included in the print job to be processed so as to be at least equal to a data amount per page when a value of throughput in a RIP process is almost equal to a maximum value of throughput in a printing process, when the element selected by the selecting means (16h) is the printing speed, and the threshold value is a data amount per page when the value of the throughput in the RIP process is less than the maximum value of the throughput in the printing process.
The image processing apparatus according to claim 1 calculates a data amount per page of a print job to be processed, and extracts images having a resolution that exceeds a printing resolution from among images included in the print job to be processed when the calculated data amount is greater than a data amount (threshold value) per page when a value of throughput in a RIP process is equal to a value of throughput in a printing process. The image processing apparatus converts the resolution of the extracted images into the printing resolution, and calculates a data amount per page of the print job after conversion into the printing resolution. When the data amount per page of the print job after the conversion into the printing resolution is greater than the threshold value, the image processing apparatus causes a user to select an element that the user desires to prioritize from among printing speed and image quality, and when the selected element is the printing speed, the image processing apparatus reduces the resolutions of the images included in the print job to be processed.
This allows improving of the throughput in the RIP process and improving of productivity, and also allows printing to be performed while prioritizing the element that the user desires to prioritize.

BRIEF DESCRIPTION OF DRAWINGS

FIG. 1 illustrates an exemplary configuration of a printing system according to Embodiment 1.
FIG. 2 is a functional block diagram illustrating an exemplary configuration of a printing device that configures the printing system according to Embodiment 1.
FIG. 3 illustrates an example of a graph of a function F indicating a relationship between a data amount per page and throughput in a RIP process.
FIG. 4 illustrates an example of an eigenvalue management table according to Embodiment 1.
FIG. 5 is a functional block diagram illustrating an exemplary configuration of an information terminal device that configures the printing system according to Embodiment 1.
FIG. 6 illustrates an example of a selection screen according to Embodiment 1.
FIG. 7 illustrates a portion of an example of a flowchart explaining a flow of a resolution converting process performed in the printing device according to Embodiment 1.
FIG. 8 illustrates another portion of an example of a flowchart explaining a flow of a resolution converting process performed in the printing device according to Embodiment 1.
FIG. 9 illustrates an example of a flowchart explaining a flow of a selecting process performed in the information terminal device according to Embodiment 1.
FIG. 10 is a functional block diagram illustrating an exemplary configuration of a printing device that configures a printing system according to Embodiment 2.
FIG. 11 illustrates a portion of an example of a flowchart explaining a flow of a resolution converting process performed in the printing device according to Embodiment 2.
FIG. 12A illustrates a concrete example of an object to be printed according to the embodiments before replacing an image having a resolution that is greater than or equal to a threshold value with a pattern image or the like.
FIG. 12B illustrates a concrete example of an object to be printed according to the embodiments after replacing an image having a resolution that is greater than or equal to a threshold value with a pattern image.

DESCRIPTION OF EMBODIMENTS

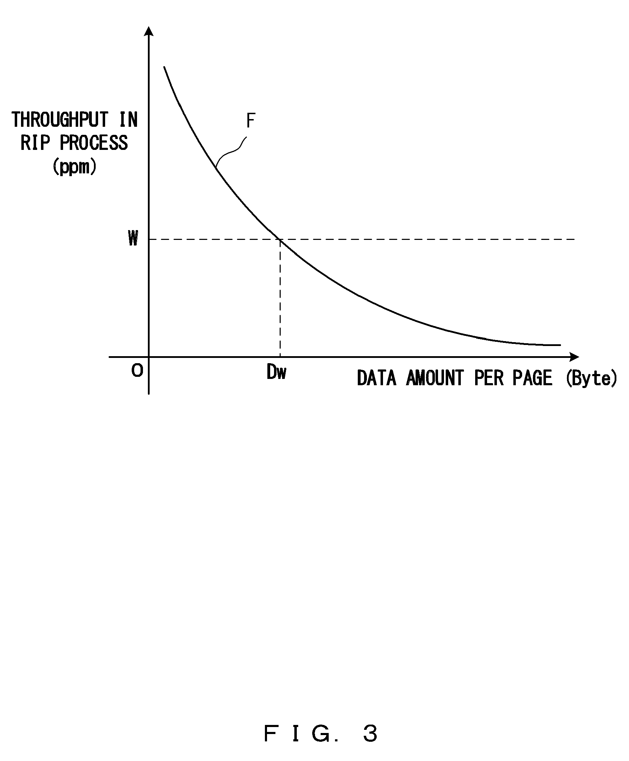

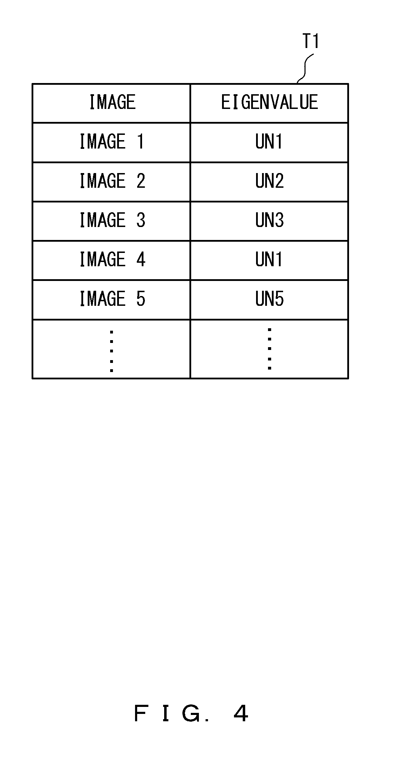

Embodiments of the present invention are described below in detail with reference to the drawings.
Embodiment 1 is described.

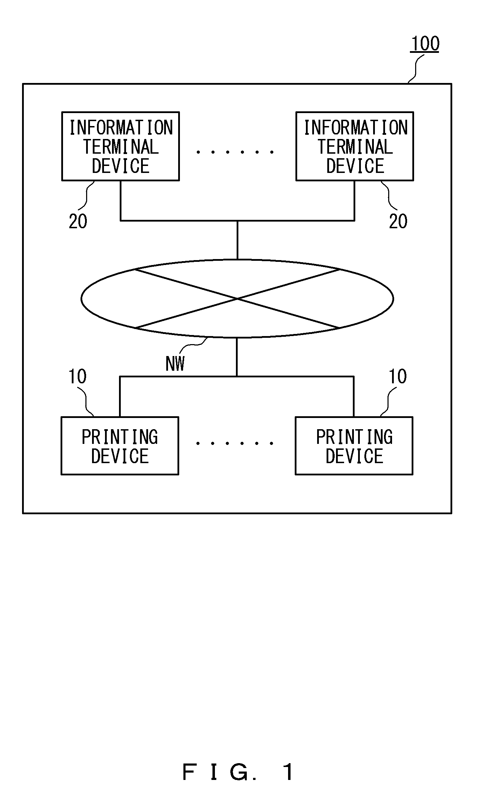

FIG. 1 illustrates an exemplary configuration of a printing system 100 according to Embodiment 1. As illustrated in FIG. 1, the printing system 100 includes one or a plurality of printing devices 10, which serve as image processing apparatuses, and one or a plurality of information terminal devices 20, and the printing devices 10 and the information terminal devices 20 are connected via a network NW so as to be communicable with each other.
The description below is given assuming that, in Embodiment 1, the format of a print job that is output from the information terminal device 20 and is input into the printing device 10 is, but is not limited to, the PS (Post Script) format.

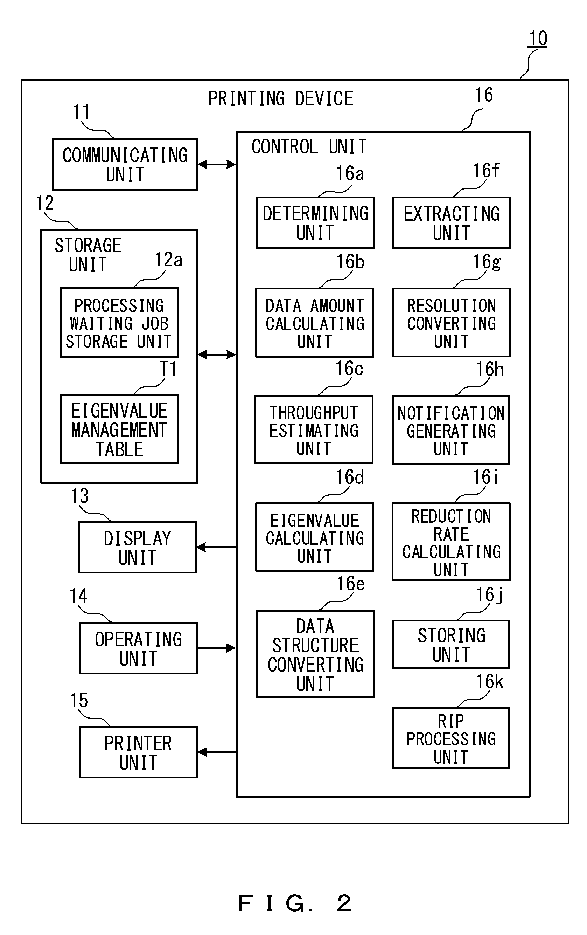

FIG. 2 is a functional block diagram illustrating an exemplary configuration of the printing device 10 that configures the printing system 100. The printing device 10 is a device that processes a print job output from the information terminal device 20, and that performs printing out on a printing medium such as paper. The printing device 10 includes a communicating unit 11, a storage unit 12, a display unit 13, an operating unit 14, a printer unit 15, and a control unit 16, as illustrated in FIG. 2.
The communicating unit 11 includes, for example, a communication module or the like, and performs communication with the information terminal devices 20 via the network NW. As an example, the communicating unit 11 receives a print job that is output from the information terminal device 20.
The storage unit 12 includes, for example, a RAM (Random Access Memory), a ROM (Read Only Memory), a nonvolatile memory, or the like. The storage unit 12 functions as a work area of a CPU (Central Processing Unit) that the control unit 16 is provided with, a program area in which various programs such as an operation program for controlling the entirety of the printing device 10 are stored, and a data area in which various pieces of data such as a function F (described later in detail) or an eigenvalue management table T1 (described later in detail) are stored.
The storage unit 12 also functions as a processing waiting job storage unit 12a, as illustrated in FIG. 2. The processing waiting job storage unit 12a is a storage unit in which print jobs on which the RIP process are performed are temporarily stored, a RIP processing unit 16k (described later in detail) performs the RIP process on the print jobs in order of how early a timing is of being stored in the processing waiting job storage unit 12a, and then a printing process on the print jobs is performed.
With reference to FIG. 3 and FIG. 4, the function F and the eigenvalue management table T1 that have been stored in the data area of the storage unit 12 are respectively described below.

FIG. 3 illustrates an example of a graph of the function F that indicates a relationship between a data amount (Byte) per page and a throughput (ppm (paper per minute)) in the RIP process. The function F is a function that is obtained by measuring throughputs at the time of performing the RIP process on respective print jobs (print jobs in the PS format in Embodiment 1) having different data amounts per page and by performing calculation by, for example, a least-squares method. The function F is a function that indicates the relationship between the data amount per page and the throughput in the RIP process, as illustrated in FIG. 3.

In FIG. 3, W expresses a value indicating throughput (ppm) of a printer engine, namely, printing speed (ppm). Accordingly, at least when the throughput in the RIP process is greater than or equal to W, the RIP process does not become a bottleneck that reduces productivity.

Alternatively, the relationship between the data amount per page and the throughput in the RIP process may for example be tabulated and stored instead of being indicated using a function.

FIG. 4 illustrates an example of the eigenvalue management table T1 according to Embodiment 1. The eigenvalue management table T1 is a table for managing eigenvalues of images in a print job to be processed, and is managed by an eigenvalue calculating unit 16d (described later in detail). The eigenvalue management table T1 is a table that is referred to, for example, when a data structure converting unit 16e (described later in detail) converts a data structure of a print job to be processed into a cacheable data structure, and is a table in which respective images are associated with eigenvalues, as illustrated in FIG. 4. Note that the eigenvalue management table T1 is generated for each of the print jobs.

An identifier of an image included in a print job to be processed (e.g., an image name) and an eigenvalue for a corresponding image are respectively stored in the column "image" and the column "eigenvalue" by the eigenvalue calculating unit 16d.

Returning to FIG. 2, the display unit 13 includes a display device such as an LCD (Liquid Crystal Display) or an organic EL (Electro-Luminescence) or the like, and displays, for example, images, various messages, various function buttons or the like on a display screen.

The operating unit 14 is realized by, for example, a ten key, a touch panel that is displayed on the display screen of the display unit 13, or the like, and a user operates the operating unit 14 and inputs an instruction to the printing device 10 so as to execute a desired process.

The printer unit 15 includes, for example, a printer engine or the like, and when raster data is generated by the RIP processing unit 16k, the printer unit 15 performs a layout process for each of the pages. Then, the printer unit 15 performs image processing such as calibration on page data obtained by performing the layout process, and prints out the page data on a printing medium.

The control unit 16 includes, for example, a CPU or the like, executes an operation program stored in the program area of the storage unit 12, and realizes the functions of a determining unit 16a, a data amount calculating unit 16b, a throughput estimating unit 16c, an eigenvalue calculating unit 16d, a data structure converting unit 16e, an extracting unit 16f, a resolution converting unit 16g, a notification generating unit 16h, a reduction rate calculating unit 16i, a storing unit 16j, and a RIP processing unit 16k, as illustrated in FIG. 2. In addition, the control unit 16 executes an operation program, and performs processes such as a control process for controlling the entirety of the printing device 10 or a resolution converting process that is described later in detail.

The determining unit 16a determines whether a print job has been received. The determining unit 16a also determines whether a value of throughput in the RIP process that has been estimated by the throughput estimating unit 16c is greater than or equal to a value W of throughput in a printing process. In other words, the determining unit 16a determines whether a RIP processing speed of a print job to be processed is greater than or equal to a printing speed.

The determining unit 16a also analyzes the received print job, and determines whether a data structure is a cacheable data structure. More specifically, the determining unit 16a determines whether the data structure is a cacheable data structure by analyzing whether the received print job includes, for example, a repetition command. In addition, the determining unit 16a refers to the eigenvalue management table T1, and determines whether there are a plurality of images having the same content by determining whether there are a plurality of images having the same eigenvalue.

Further, the determining unit 16a determines whether an image having a resolution greater than a printing resolution has been extracted. The determining unit 16a also determines whether a selected content notification has been received. When the determining unit 16a determines that the selected content notification has been received, the determining unit 16a further determines whether the selected content notification is a selected content notification indicating that a resolution will be reduced.

The data amount calculating unit 16b calculates a data amount per page of the received print job on the basis of a data amount and the number of pages of the received print job. The data amount calculating unit 16b also calculates a data amount per page after data structure conversion on the basis of a data amount and the number of pages of the print job after the data structure conversion. Further, the data amount calculating unit 16b calculates a data amount per page after converting a resolution of an image having a resolution that exceeds the printing resolution into the printing resolution on the basis of a data amount and the number of pages of a print job after converting a resolution of an image extracted by the extracting unit 16f into the printing resolution.

The throughput estimating unit 16c estimates throughput in the RIP process that corresponds to the data amount per page calculated by the data amount calculating unit 16b, using the function F stored in the data area of the storage unit 12.

The eigenvalue calculating unit 16d calculates eigenvalues that enable uniquely identifying images for respective images included in a print job to be processed, and stores the eigenvalues calculated for the respective images in the eigenvalue management table T1 with the eigenvalues respectively associated with the images. Here, hash values, CRC (Cyclic Redundancy Check) values, or the like are considered to be the eigenvalues.

The data structure converting unit 16e converts a data structure of a print job into a cacheable data structure when the data structure of the print job is not the cacheable data structure. More specifically, the data structure converting unit 16e refers to the eigenvalue management table T1, and converts the data structure of the print job into a data structure using a repetition command when the print job includes plural pieces of data having the same image content. As a result, the data amount of the print job has been reduced.

As an example, in the eigenvalue management table T1 illustrated in FIG. 4, an image 1 and an image 4 have the same image content. In this case, a data amount can be reduced by a data amount of the image 4 by replacing data of the image 4 with the repetition command.

Returning to FIG. 2, the extracting unit 16f extracts an image having a resolution that exceeds the printing resolution from among images included in the print job to be processed.

The resolution converting unit 16g converts the resolution of the image extracted by the extracting unit 16f into the printing resolution. The resolution converting unit 16g also converts the resolution of the image to be converted in accordance with a reduction rate R calculated by the reduction rate calculating unit 16i.

The notification generating unit 16h generates various notifications, and transmits the generated notifications to the information terminal device 20 via the communicating unit 11. As an example, when no images have been extracted by the extracting unit 16f, or when the throughput in the RIP process is less than a throughput in the printing process even after converting the resolution of the extracted image into the printing resolution, the notification generating unit 16h generates an instruction request to request an instruction relating to an element (e.g., printing speed or image quality) that a user desires to prioritize in printing, and transmits the instruction request to the information terminal device 20 that is a transmission source of the print job to be processed. The instruction request includes an identifier (e.g., a job name) that enables a print job to be uniquely identified.

The reduction rate calculating unit 16i calculates the reduction rate R of the resolution such that a value of the throughput in the RIP process is equal to or almost equal to a value of the throughput in the printing process. More specifically, when the received selected content notification is a selected content notification indicating that a resolution will be reduced, the reduction rate calculating unit 16i specifies images to be reduced in resolution from among images included in the print job to be processed on the basis of image information included in the received selected content notification. In other words, the reduction rate calculating unit 16i specifies images other than the images specified by the image information from among the images included in the print job to be processed so as to be images to be reduced in resolution. Then, the reduction rate calculating unit 16i calculates the reduction rate R in accordance with formula 1 described below.

[Formula 1]

$$(D-Dw) \times P \approx [1 - (1-R)^2] \times \Sigma IDk \quad .... \quad (1)$$

In this formula, D expresses a current data amount per page of a print job to be processed, Dw expresses a data amount per page when the value of the throughput in the RIP process is equal to the value W of the throughput in the printing process, P expresses the number of pages of the print job to be processed, and IDk (k = 1,...) expresses a data amount of a specified image to be reduced in resolution.

The storing unit 16j stores print jobs in the processing waiting job storage unit 12a.

The RIP processing unit 16k obtains the print jobs from the processing waiting job storage unit 12a in order of early timing of being stored in the processing waiting job storage unit 12a by the storage unit 16j, performs the RIP process on the obtained print jobs, and generates pieces of raster data.

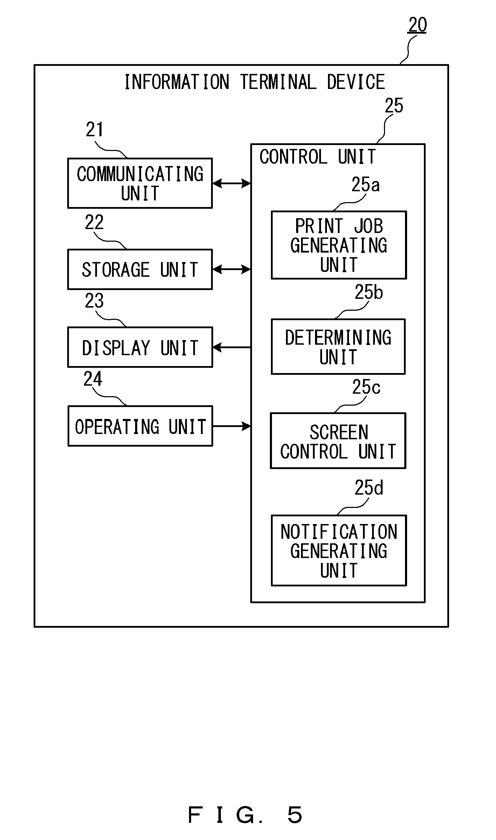

FIG. 5 is a functional block diagram illustrating an exemplary configuration of the information terminal device 20 that configures the printing system 100. The information terminal device 20 is a device that generates a print job in accordance with a user's instruction, and outputs the generated print job. As illustrated in FIG. 5, the information terminal device 20 includes a communicating unit 21, a storage unit 22, a display unit 23, an operating unit 24, and a control unit 25.

The communicating unit 21 includes, for example, a communication module or the like, and communicates with the printing device 10 via the network NW. As an example, the communicating unit 21 transmits the generated print job to the printing device 10.

The storage unit 22 includes, for example, a RAM, a ROM, an HDD (Hard Disk Drive) or the like. The storage unit 22 functions as a work area of a CPU included in the control unit 25, a program area for storing various programs such as an operation program for controlling the entirety of the information terminal device 20, and a data area for storing various pieces of data such as template data of various setting screens such as a selection screen (described later in detail).

The display unit 23 includes, for example, a display device such as an LCD or an organic EL, or the like, and displays, for example, various function buttons, various setting screens, and the like.

The operating unit 24 is realized by, for example, a keyboard, a touch panel displayed on the display screen of the display unit 23 or the like, and a user operates the operating unit 24 so as to perform a desired process such as a printing instruction.

The control unit 25 includes, for example, a CPU and the like, and executes an operation program stored in the program area of the storage unit 22 so as to realize the functions of a print job generating unit 25a, a determining unit 25b, a screen control unit 25c, and a notification generating unit 25d, as illustrated in FIG. 5. The control unit 25 also executes an operation program so as to perform processes such as a control process for controlling the entirety of the information terminal device 20 or a selecting process described later in detail.

The print job generating unit 25a generates a print job for an object to be printed in accordance with a user's instruction, and transmits the generated print job to a specified printing device 10 via the communicating unit 21.

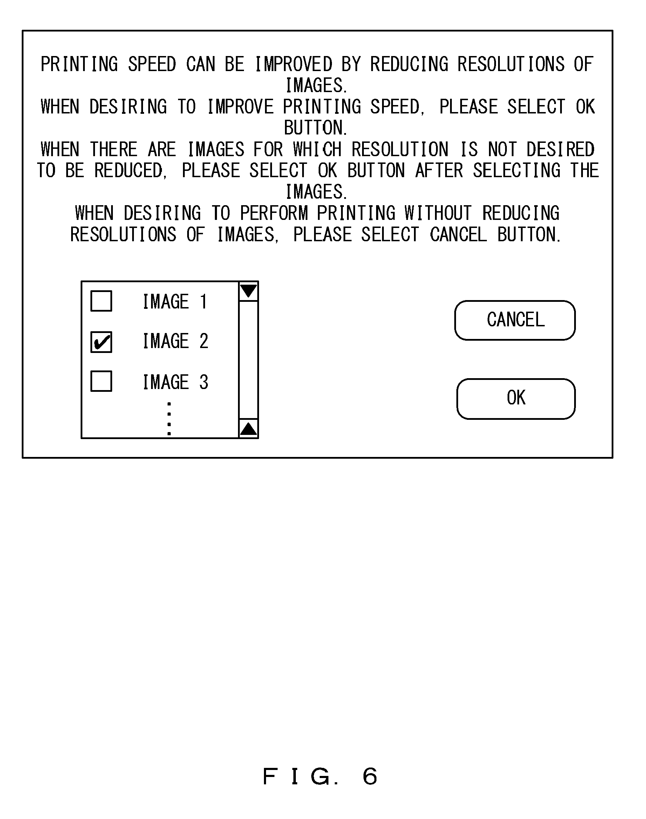

The determining unit 25b determines whether an instruction request has been received. After the screen control unit 25c controls the display unit 23 so as to display the selection screen (illustrated in FIG. 6), the determining unit 25b determines whether an OK button has been selected by the user. When the determining unit 25b determines that the OK button has not been selected, the determining unit 25b further determines whether a cancel button has been selected by the user.

The screen control unit 25c controls the display unit 23 so as to display various setting screens on the display screen in accordance with a user's operation content. More specifically, the screen control unit 25c obtains corresponding template data from the data area of the storage unit 22, generates the setting screen on the basis of the obtained template data as needed, and displays the generated setting screen on the display screen.

As an example, upon receipt of the instruction request, the screen control unit 25c generates a selection screen including a list of images included in a corresponding print job, and displays the generated selection screen on the display screen. FIG. 6 illustrates an example of a selection screen according to Embodiment 1.

When the selection screen illustrated in FIG. 6 is displayed, a user can select printing with resolution reduced and printing speed prioritized or printing with image quality prioritized, and can further select images for which the user does not desire to reduce the resolution when the printing with the resolution reduced is selected.

Returning to FIG. 5, the notification generating unit 25d generates a selected content notification indicating content selected by a user in accordance with the selection screen, and transmits the generated selected content notification to the printing device 10 that is a transmission source of the instruction request. More specifically, the notification generating unit 25d generates a selected content notification indicating that the resolution will not be reduced when the user selects the cancel button, that is, when the user does not desire to reduce the resolution.

On the other hand, when the user selects the OK button, that is, when the user desires to reduce the resolution, the notification generating unit 25d generates a selected content notification indicating that the resolution will be reduced. In this case, when the user selects images for which the user does not desire to reduce the resolution, the notification generating unit 25d generates a selected content notification that includes image information that enables specifying of the images, and that indicates that the resolution will be reduced.

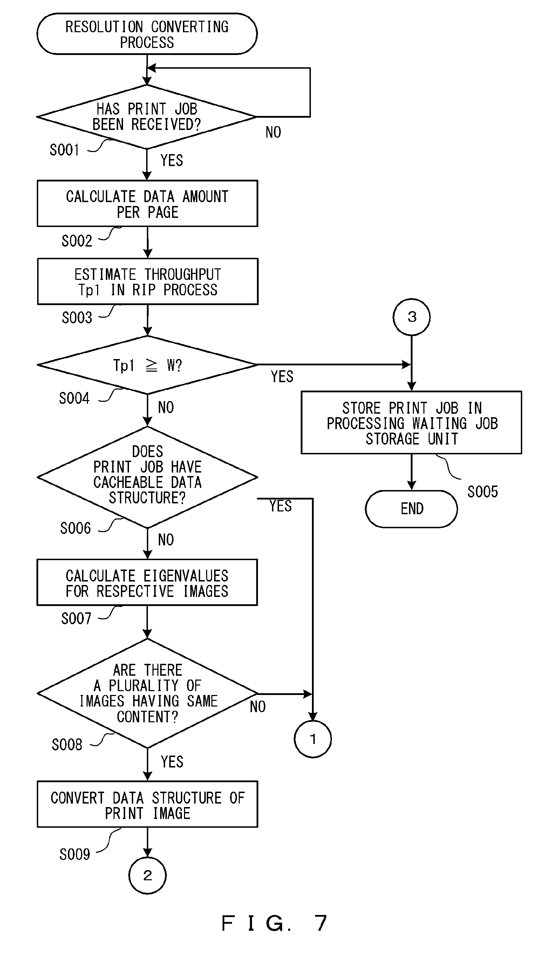

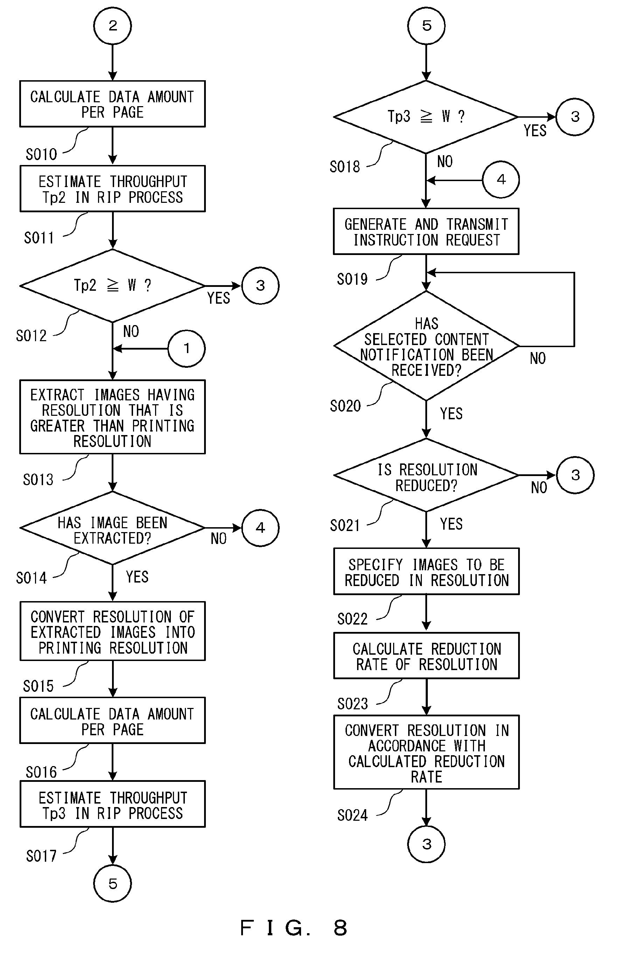

With reference to FIG. 7 and FIG. 8, a resolution converting process according to Embodiment 1 is described next.

FIG. 7 and FIG. 8 are respective portions of an example of a flowchart explaining a flow of a resolution converting process performed in the printing device 10 according to Embodiment 1. The resolution converting process is started using the reception of the print job output from the information terminal device 20 as a trigger.

The determining unit 16a determines whether the print job has been received (step S001). When the determining unit 16a determines that the print job has not been received (step S001: NO), the process of step S001 is repeated, and the reception of the print job is awaited.

On the other hand, when the determining unit 16a determines that the print job has been received (step S001: YES), the data amount calculating unit 16b calculates a data amount per page of the received print job (step S002).

Then, the throughput estimating unit 16c estimates a value Tp1 of the throughput in the RIP process that corresponds to the data amount per page calculated by the data amount calculating unit 16b (step S003).

The determining unit 16a then determines whether the value Tp1 of the throughput in the RIP process that has been estimated by the throughput estimating unit 16c is greater than or equal to a value W of the throughput in the printing process (step S004). When the determining unit 16a determines that the estimated value Tp1 of the throughput in the RIP process is greater than or equal to the value W (step S004: YES), the storing unit 16j stores the received print job in the processing waiting job storage unit 12a (step S005). Then, the process is finished, and the reception of a next print job is awaited.

On the other hand, when the determining unit 16a determines that the estimated value Tp1 of the throughput in the RIP process is less than the value W (step S004: NO), the determining unit 16a further analyzes the print job to be processed, and determines whether a data structure is a cacheable data structure (step S006). When the determining unit 16a determines that the data structure is a cacheable data structure (step S006: YES), the process moves on to step S013 described later.

On the other hand, when the determining unit 16a determines that the data structure is not a cacheable data structure (step S006: NO), the eigenvalue calculating unit 16d calculates eigenvalues of respective images included in the print job to be processed, and stores the eigenvalues calculated for the respective images in the eigenvalue management table T1 with the eigenvalues respectively associated with the images (step S007).

Then, the determining unit 16a refers to the eigenvalue management table T1, and determines whether there are a plurality of images having the same content in the images included in the print job (step S008). When the determining unit 16a determines that there are no images having the same content (step S008: NO), the process moves on to step S013.

On the other hand, when the determining unit 16a determines that there are a plurality of images having the same content (step S008: YES), the data structure converting unit 16e refers to the eigenvalue management table T1, and converts the data structure of the print job to be processed into the cacheable data structure (step S009).

Then, the data amount calculating unit 16b calculates a data amount per page after data structure conversion on the basis of the data amount and the number of pages of the print job after the data structure conversion (step S010). The throughput estimating unit 16c estimates a value Tp2 of the throughput in the RIP process that corresponds to the data amount per page after the data structure conversion, using the function F (step S011).

The determining unit 16a determines whether the value Tp2 of the throughput in the RIP process estimated by the throughput estimating unit 16c is greater than or equal to the value W of the throughput in the printing process (step S012). When the determining unit 16a determines that the estimated value Tp2 of the throughput in the RIP process is greater than or equal to the value W (step S012: YES), the storing unit 16j stores the print job after the data structure conversion in the processing waiting job storage unit 12a (step S005). Then, the process is finished, and the reception of a next print job is awaited.

On the other hand, when the determining unit 16a determines that the estimated value Tp2 of the throughput in the RIP process is less than the value W (step S012: NO), the extracting unit 16f extracts an image having a resolution that exceeds the printing resolution from among the images included in the print job to be processed (step S013).

Then, the determining unit 16a determines whether the image has been extracted (step S014). When the determining unit 16a determines that the image has not been extracted (step S014: NO), the process moves on to step S019 described later. On the other hand, when the determining unit 16a determines that the image has been extracted (Step S014: YES), the resolution converting unit 16g converts the resolution of the image extracted by the extracting unit 16f into the printing resolution (step S015).

Then, the data amount calculating unit 16b calculates a data amount per page after conversion into the printing resolution on the basis of the data amount and the number of pages of the print job after the conversion into the printing resolution (step S016). The throughput estimating unit 16c estimates a value Tp3 of the throughput in the RIP process that corresponds to the data amount per page after the conversion into the printing resolution, using the function F (step S017).

The determining unit 16a determines whether the value Tp3 of the throughput in the RIP process that has been estimated by the throughput estimating unit 16c is greater than or equal to the value W of the throughput in the printing process (step S018). When the determining unit 16a determines that the estimated value Tp3 of the throughput in the RIP process is greater than or equal to the value W (step S018: YES), the storing unit 16j stores the print job after the conversion into the printing resolution in the processing waiting job storage unit 12a (step S005). Then, the process is finished, and the reception of a next print job is awaited.

On the other hand, when the determining unit 16a determines that the estimated value Tp3 of the throughput in the RIP process is less than the value W (step S018: NO), the notification generating unit 16h generates an instruction request for requesting an instruction relating to an element (e.g., printing speed or image quality) that a user desires to prioritize in printing, and transmits the instruction request to the information terminal device 20 that is a transmission source of the print job to be processed (step S019).

The determining unit 16a then determines whether the selected content notification transmitted from the information terminal device 20 has been received (step S020). When the determining unit 16a determines that the selected content notification has not been received (step S020: NO), the process of step S020 is repeated, and the reception of the selected content notification is awaited.

On the other hand, when it is determined that the selected content notification has been received (step S020:

YES), the determining unit 16a further determines whether the received selected content notification is a selected content notification indicating that the resolution will be reduced (step S021). When the determining unit 16a determines that the received selected content notification is a selected content notification indicating that the resolution will not be reduced (step S021: NO), the storing unit 16j stores the print job in the processing waiting job storage unit 12a without further performing a process of reducing the resolution (step S005). Then, the process is finished, and the reception of a next print job is awaited.

On the other hand, when the determining unit 16a determines that the received selected content notification is a selected content notification indicating that the resolution will be reduced (step S021: YES), the reduction rate calculating unit 16i specifies images to be reduced in resolution from among images included in the print job to be processed on the basis of the image information included in the received selected content notification (step S022). Then, the reduction rate calculating unit 16i calculates a reduction rate R of the resolution on the basis of the specified images such that the value of the throughput in the RIP process is equal to or almost equal to the value of the throughput in the printing process (step S023).

Then, the resolution converting unit 16g converts the resolution of the images to be converted (the images specified by the reduction rate calculating unit 16i) in accordance with the reduction rate R calculated by the reduction rate calculating unit 16i (step S024). The storing unit 16j stores the print job for which the resolution has been converted in accordance with the reduction rate R in the processing waiting job storage unit 12a (step S005). Then, the process is finished, and the reception of a next print job is awaited.

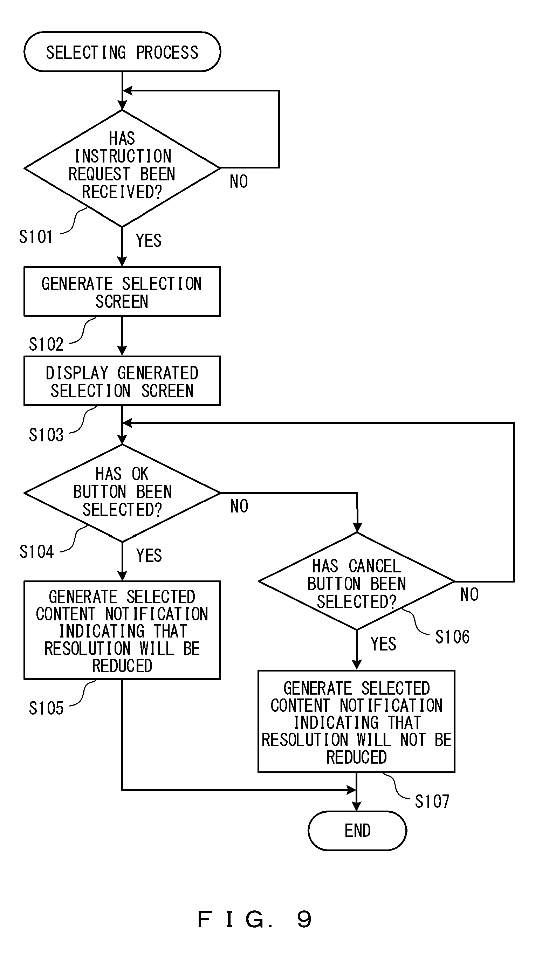

With reference to FIG. 9, a selecting process according to Embodiment 1 is described next. FIG. 9 illustrates an example of a flowchart explaining a flow of a selecting process performed in the information terminal device 20 according to Embodiment 1. The selecting process is started by using the reception of the instruction request transmitted by the printing device 10 as a trigger.

The determining unit 25b determines whether the instruction request has been received (step S101). When the determining unit 25b determines that the instruction request has not been received (step S101: NO), the process of step S101 is repeated, and the reception of the instruction request is awaited.

On the other hand, when the determining unit 25b determines that the instruction request has been received (step S101: YES), the screen control unit 25c generates a selection screen on the basis of the template data stored in the data area of the storage unit 22 (step S102), and controls the display unit 23 so as to display the selection screen generated on the display screen (step S103).

Then, the determining unit 25b determines whether the OK button on the selection screen has been selected (step S104) . When the determining unit 25b determines that the OK button on the selection screen has been selected (step S104: YES), the notification generating unit 25d generates a selected content notification indicating that the resolution will be reduced, and transmits the generated selected content notification to the information terminal device 20 that is a transmission source of the instruction request (step S105). Then, the process is finished, and the reception of a next instruction request is awaited.

On the other hand, when it is determined that the OK button on the selection screen has not been selected (step S104: NO), the determining unit 25b further determines whether the cancel button on the selection screen has been selected (step S106). When the determining unit 25b determines that the cancel button on the selection screen has not been selected (step S106: NO), the process returns to step S104, and the processes above are repeated.

On the other hand, when the determining unit 25b determines that the cancel button on the selection screen has been selected (step S106: YES), the notification generating unit 25d generates a selected content notification indicating that the resolution will not be reduced, and transmits the generated selected content notification to the information terminal device 20 that is a transmission source of the instruction request (step S107). Then, the process is finished, and the reception of a next instruction request is awaited.

According to Embodiment 1, the printing device 10 calculates a data amount per page of a print job to be processed, and when the calculated data amount is greater than a data amount Dw per page when the value of the throughput in the RIP process is equal to the value W of the throughput in the printing process, the printing device 10 extracts images having a resolution that exceeds the printing resolution from among images included in the print job to be processed. Then, the printing device 10 converts the resolution of the extracted images into the printing resolution, and calculates a data amount per page of the print job after conversion into the printing resolution. When the data amount per page of the print job after the conversion into the printing resolution is greater than the data amount Dw, the printing device 10 has a user select an element that the user desires to prioritize from among printing speed and image quality, and when the selected element is the printing speed, the printing device 10 reduces the resolutions of the images included in the print job to be processed.

This allows improving of the throughput in the RIP process so as to improve productivity, and printing with priority an element that a user desires to prioritize.

In addition, according to Embodiment 1 described above, when the element that a user desires to prioritize is the printing speed, images for which the user does not desire to reduce a resolution are further selected by the user, and the selected images are excluded from images to be reduced in resolution. This allows selecting of images for which the user does not desire to reduce a resolution so as to improve convenience.

According to Embodiment 1 described above, when the calculated data amount is greater than the data amount Dw, the printing device 10 determines whether a data structure of a print job to be processed is not a data structure cacheable in the RIP process and whether the print job to be processed includes plural pieces of data having the same image content. When the printing device 10 determines that the data structure of the print job to be processed is not a cacheable data structure and that the print job to be processed includes plural pieces of data having the same image content, the printing device 10 converts the data structure of the print job to be processed into a cacheable data structure, and calculates a data amount per page of the print job after data structure conversion. The printing device 10 only extracts images having a resolution that exceeds the printing resolution from among images included in the print job to be processed when the data amount per page of the print job after the data structure conversion is greater than the data amount Dw.

This allows suppressing of an occurrence of a process of having a user select an element that the user desires to prioritize so as to reduce a processing load and to improve a processing efficiency.

Embodiment 2 is described.

Embodiment 1 has been described using as an example a print job in the PS format that is capable of being converted into a data structure cacheable in the RIP process with the format unchanged. Embodiment 2 is described using as an example a print job in the PDF (Portable Document Format) format that is not capable of being converted into a structure cacheable in the RIP process with the format unchanged.

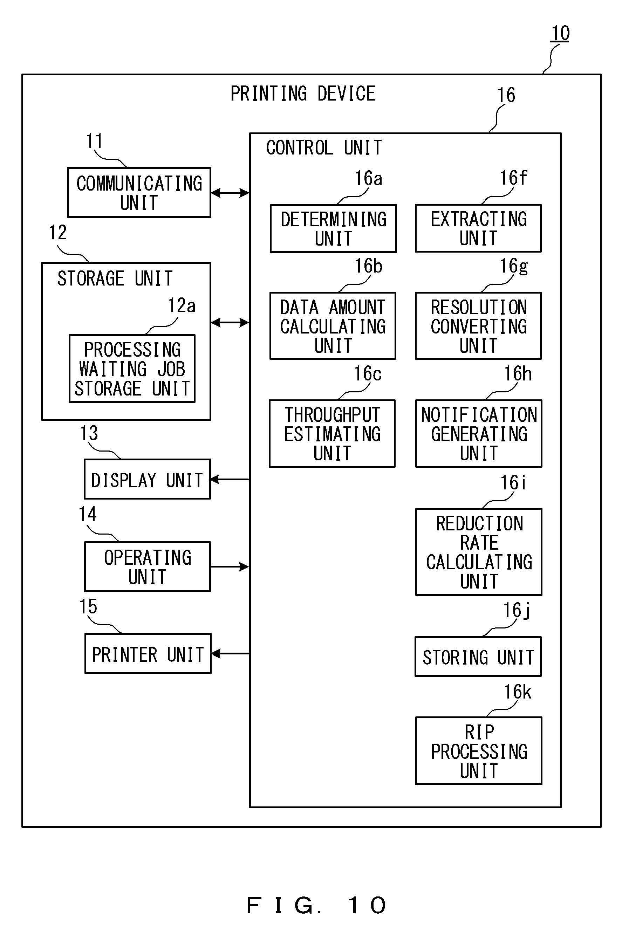

FIG. 10 is a functional block diagram illustrating an exemplary configuration of the printing device 10 that configures the printing system 100 according to Embodiment 2. A configuration of the printing device 10 according to Embodiment 2 is basically the same as that in Embodiment 1. However, as illustrated in FIG. 10, Embodiment 2 differs from Embodiment 1 in that the control unit 16 does not include the eigenvalue calculating unit 16d and the data structure converting unit 16e as functional units, and that the storage unit 12 does not store the eigenvalue management table T1. This is because the data structure of the print job according to Embodiment 2 is not capable of being converted into a cacheable data structure with a format unchanged, as described above.

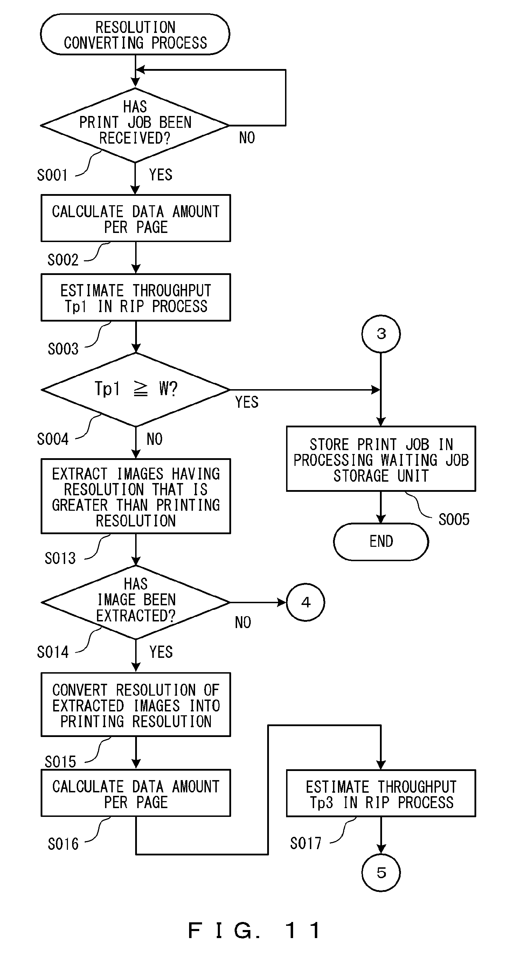

With reference to FIG. 11, a resolution converting process according to Embodiment 2 is described next. FIG. 11 illustrates a portion of an example of a flowchart explaining a flow of a resolution converting process performed in the printing device 10 according to Embodiment 2. The resolution converting process is started using the reception of a print job output from the information terminal device 20 as a trigger.

The same reference numerals are assigned to steps of processes that are the same as those in Embodiment 1, and a portion peculiar to Embodiment 2 is mainly described here. As described below, the resolution converting process according to Embodiment 2 is processing in which the processes of step S006 through step S012 are omitted from the resolution converting process according to Embodiment 1.

In the process of step S004, when the determining unit 16a determines that the estimated value Tp1 of the throughput in the RIP process is less than the value W (step S004: NO), the processes of step S006 through step S012 are skipped, and the extracting unit 16f extracts images having a resolution that exceeds the printing resolution from among the images included in the print job to be processed (step S013). Then, the process moves on to the process of step S014 and the processes that follow described in Embodiment 1.

The above Embodiment 1 has been described using the print job in the PS format as an example; however, the print job is not limited to this, but may be a print job in another format that can be converted into a data structure cacheable in the RIP process with a format unchanged.

In addition, the above Embodiment 2 has been described using the print job in the PDF format as an example; however, the print job is not limited to this, but may be a print job in another format that is not capable of being converted into a data structure cacheable in the RIP process.

Further, in the above Embodiment 2, when the printing device 10 is mounted with a RIP engine that corresponds to a print job in a format that can be converted into the data structure cacheable in the RIP process, a data structure of the print job may be converted into a format that can be converted into a cacheable data structure.

In the above Embodiments 1 and 2, a reduction rate threshold value Z may be set in advance, and when the reduction rate R calculated by the reduction rate calculating unit 16i exceeds the reduction rate threshold value Z, the resolution converting unit 16g may convert a resolution, assuming that the reduction rate R is equal to Z. This allows preventing resolutions before and after conversion of images to be converted from greatly varying, for example, when a number of images are selected as images for which a user does not desire to reduce the resolution.

In the above Embodiments 1 and 2, the throughput in the RIP process is estimated, and the determining unit 16a determines whether the estimated value of the throughput is greater than or equal to the value W of the throughput in the printing process; however, the embodiments are not limited to this, and the determining unit 16a may determine whether the data amount per page calculated by the data amount calculating unit 16b is less than or equal to a value Dm. This is because the throughput in the RIP process is reduced as the data amount per page increases, as illustrated in FIG. 3. As a result, the number of processes can be reduced.

In the above Embodiments 1 and 2, images included in a list of images in the selection screen may be, for example, images having resolutions that are greater than or equal to a preset threshold value, or resolutions may be displayed in the list of images while being associated with the images. This allows easy determination as to whether the resolution is to be reduced so as to improve convenience for a user.

The above Embodiments 1 and 2 have described that the selection screen is displayed on the display screen of the information terminal device 20; however, the embodiments are not limited to this, but the selection screen may be displayed on the display screen of the display unit 13 of the printing device 10.

Further, in the above Embodiments 1 and 2, the images included in the list of images on the selection screen may be presented to a user, for example, by being printed, or by being displayed on the display screen of the printing device 10 or the information terminal device 20. This allows easy selection of images for which the user does not desire to reduce the resolution so as to improve convenience for the user.

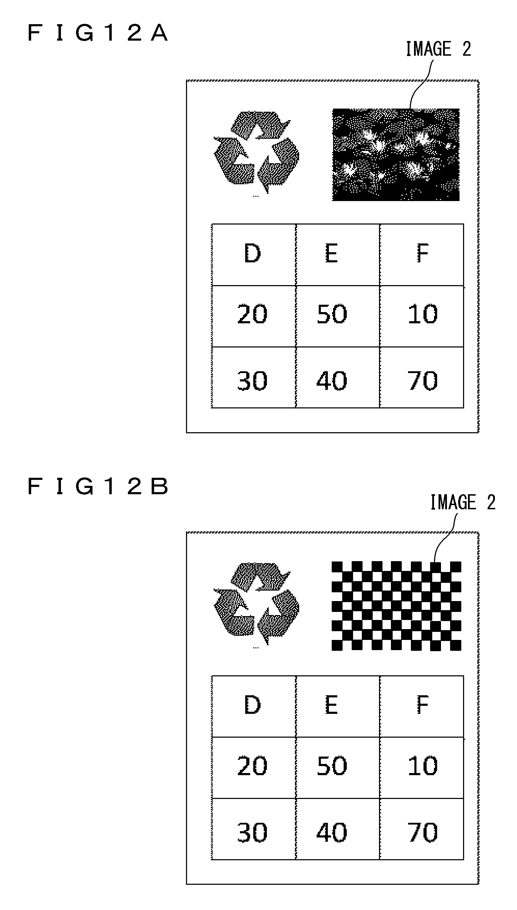

As an example, when the images included in the list of images on the selection screen are set to be images having resolutions that are greater than or equal to a preset threshold value, and the images are presented after being printed, the images having resolutions that are greater than or equal to the threshold value (an image 2 in FIG. 12) may be printed after being replaced with images having a pattern such as a grating pattern or a checker pattern, as illustrated in FIG. 12. In addition, as an example, when the images having resolutions that are greater than or equal to the threshold value are displayed on the display screen, images obtained by replacing the images having resolutions that are greater than or equal to the threshold value with pattern images may be converted so as to be in a general-purpose format displayable on the display screen, such as PDF or MBP (BitMaP). Needless to say, another method may be employed that enables identifying arrangement positions of the images included in the list of images on the selection screen. Here, FIG. 12A illustrates a concrete example of an object to be printed according to the embodiments before replacing an image having a resolution that is greater than or equal to a threshold value with a pattern image or the like.

FIG. 12B illustrates a concrete example of an object to be printed according to the embodiments after replacing an image having a resolution that is greater than or equal to a threshold value with a pattern image.

The above Embodiments 1 and 2 have been described assuming that the resolution converting process is performed on a side of the printing device 10; however, the embodiments are not limited to this, but a main portion of the resolution converting process may be performed on a side of the information terminal device 20.

In this case, as an example, when a format of a print job generated by the information terminal device 20 is the PS format, mail units of the function units included in the control unit 16 of the printing device 10 (the determining unit 16a, the data amount calculating unit 16b, the throughput estimating unit 16c, the eigenvalue calculating unit 16d, the data structure converting unit 16e, the extracting unit 16f, the resolution converting unit 16g, the notification generating unit 16h, and the reduction rate calculating unit 16i) may be included in the control unit 25 of the information terminal device 20. In this case, instruction requests may be transmitted to the screen control unit 25c, and selected content notifications may be transmitted to the reduction rate calculating unit 16i. Print jobs obtained by processing the generated print jobs may be output to the printing device 10.

An operation program for executing the operations above may be distributed after being stored in a computer-readable recording medium such as a CD-ROM (Compact Disk-Read Only Memory), a DVD (Digital Versatile Disk), or an MO (Magneto Optical disk), and may be installed on a computer such as the printing device 10 so as to perform the processes above. Further, a program may be stored in a disk device included in a server device on the internet, or the like, may be superimposed on a carrier, for example, and may be downloaded to a computer.

The embodiments of the present invention have been described, but the present invention is not limited to the embodiments above, and various configurations or embodiments can be employed without departing from the spirit of the present invention.

**Claims**

**1.** An image processing apparatus comprising:

first data amount calculating means (16b) for calculating a first data amount that is a data amount per page of a print job to be processed;
first determining means (16a) for determining whether the first data amount calculated by the first data amount calculating means (16b) is less than or equal to a preset threshold value;
extracting means (16f) for extracting images having a resolution that exceeds a printing resolution from among images included in the print job to be processed when it is determined by the first determining means (16a) that the calculated first data amount is greater than the threshold value;
first resolution converting means (16g) for converting the resolution of the images extracted by the extracting means (16f) into the printing resolution;

second data amount calculating means (16b) for calculating a second data amount that is a data amount per page of the print job after conversion into the printing resolution;

second determining means (16a) for determining whether the second data amount calculated by the second data amount calculating means (16b) is less than or equal to the threshold value;

selecting means (16h) for causing a user to select an element that the user desires to prioritize from among printing speed and image quality when it is determined by the second determining means (16a) that the calculated second data amount is greater than the threshold value; and

second resolution converting means (16i, 16g) for reducing the resolutions of the images included in the print job to be processed so as to be at least equal to a data amount per page when a value of throughput in a RIP process is almost equal to a maximum value of throughput in a printing process, when the element selected by the selecting means (16h) is the printing speed,

the threshold value being a data amount per page when the value of the throughput in the RIP process is less than the maximum value of the throughput in the printing process.

100

INFORMATION
TERMINAL
DEVICE

. . . . . .

INFORMATION
TERMINAL
DEVICE

20

20

NW

10

10

PRINTING
DEVICE

. . . . . .

PRINTING
DEVICE

F I G. 1

FIG. 2

THROUGHPUT IN
RIP PROCESS
(ppm)

F

W

O          Dw          DATA AMOUNT PER PAGE (Byte)

F I G. 3

T1

| IMAGE | EIGENVALUE |
|---------|------------|
| IMAGE 1 | UN1 |
| IMAGE 2 | UN2 |
| IMAGE 3 | UN3 |
| IMAGE 4 | UN1 |
| IMAGE 5 | UN5 |
| ⋮ | ⋮ |

F I G. 4

F I G. 5

PRINTING SPEED CAN BE IMPROVED BY REDUCING RESOLUTIONS OF IMAGES.
WHEN DESIRING TO IMPROVE PRINTING SPEED, PLEASE SELECT OK BUTTON.
WHEN THERE ARE IMAGES FOR WHICH RESOLUTION IS NOT DESIRED TO BE REDUCED, PLEASE SELECT OK BUTTON AFTER SELECTING THE IMAGES.
WHEN DESIRING TO PERFORM PRINTING WITHOUT REDUCING RESOLUTIONS OF IMAGES, PLEASE SELECT CANCEL BUTTON.

☐ IMAGE 1
☑ IMAGE 2
☐ IMAGE 3
⋮

CANCEL

OK

F I G. 6

RESOLUTION CONVERTING
PROCESS

HAS PRINT JOB
BEEN RECEIVED?          NO

S001          YES

CALCULATE DATA AMOUNT
PER PAGE

S002

ESTIMATE THROUGHPUT
Tp1 IN RIP PROCESS

S003

③

$Tp1 \geqq W$?          YES

S004          NO

DOES
PRINT JOB HAVE
CACHEABLE DATA
STRUCTURE?          YES

S006          NO

STORE PRINT JOB IN
PROCESSING WAITING JOB
STORAGE UNIT

END          S005

CALCULATE EIGENVALUES
FOR RESPECTIVE IMAGES

S007

ARE THERE
A PLURALITY OF
IMAGES HAVING SAME
CONTENT?          NO

S008          YES          ①

CONVERT DATA STRUCTURE OF
PRINT IMAGE

S009

②

F I G.  7

```
         ( 2 )                                          ( 5 )
           │                                              │
           ▼                                              ▼
┌──────────────────────┐                        ◇──────────────────◇        ( 3 )
│ CALCULATE DATA AMOUNT │                       ╱     Tp3 ≧ W ?      ╲──── YES
│      PER PAGE         │                       ╲                    ╱
└──────────────────────┘                        ◇──────────────────◇
  S010                                           S018     │ NO       ( 4 )
           │                                              │      ◄────
           ▼                                              ▼
┌──────────────────────┐                        ┌──────────────────────┐
│ ESTIMATE THROUGHPUT   │                        │ GENERATE AND TRANSMIT │
│  Tp2 IN RIP PROCESS   │                        │  INSTRUCTION REQUEST  │
└──────────────────────┘                        └──────────────────────┘
  S011                                            S019    │
           │                                              ▼
           ▼                                        ◇──────────────────◇
     ◇───────────◇        ( 3 )                    ╱        HAS         ╲
    ╱ Tp2 ≧ W ?  ╲──── YES                        ╱ SELECTED CONTENT    ╲──── NO
    ╲             ╱                                ╲ NOTIFICATION BEEN   ╱
     ◇───────────◇                                 ╲   RECEIVED?        ╱
  S012   │ NO                                        ◇────────────────◇
         │      ( 1 )                                S020    │ YES
         │  ◄────                                            ▼
         ▼                                            ◇──────────────────◇    ( 3 )
┌──────────────────────┐                             ╱   IS RESOLUTION    ╲─── NO
│ EXTRACT IMAGES HAVING │                            ╲    REDUCED?        ╱
│  RESOLUTION THAT IS   │                             ◇──────────────────◇
│ GREATER THAN PRINTING │                             S021    │ YES
│     RESOLUTION        │                                     ▼
└──────────────────────┘                             ┌──────────────────────┐
  S013   │                                           │ SPECIFY IMAGES TO BE  │
         ▼                                           │ REDUCED IN RESOLUTION │
     ◇───────────◇        ( 4 )                      └──────────────────────┘
    ╱ HAS IMAGE BEEN╲─── NO                           S022    │
    ╲  EXTRACTED?   ╱                                         ▼
     ◇───────────◇                                   ┌──────────────────────┐
  S014   │ YES                                       │ CALCULATE REDUCTION   │
         ▼                                           │  RATE OF RESOLUTION   │
┌──────────────────────┐                            └──────────────────────┘
│ CONVERT RESOLUTION OF │                            S023    │
│ EXTRACTED IMAGES INTO │                                    ▼
│ PRINTING RESOLUTION   │                            ┌──────────────────────┐
└──────────────────────┘                            │ CONVERT RESOLUTION IN │
  S015   │                                          │  ACCORDANCE WITH      │
         ▼                                          │ CALCULATED REDUCTION  │
┌──────────────────────┐                           │       RATE            │
│ CALCULATE DATA AMOUNT │                           └──────────────────────┘
│      PER PAGE         │                            S024    │
└──────────────────────┘                                    ▼
  S016   │                                                ( 3 )
         ▼
┌──────────────────────┐
│ ESTIMATE THROUGHPUT   │
│  Tp3 IN RIP PROCESS   │
└──────────────────────┘
  S017   │
         ▼
       ( 5 )
```

F I G.  8

SELECTING PROCESS

S101 — HAS INSTRUCTION REQUEST BEEN RECEIVED? — NO

YES

S102 — GENERATE SELECTION SCREEN

S103 — DISPLAY GENERATED SELECTION SCREEN

S104 — HAS OK BUTTON BEEN SELECTED? — NO

YES

S105 — GENERATE SELECTED CONTENT NOTIFICATION INDICATING THAT RESOLUTION WILL BE REDUCED

S106 — HAS CANCEL BUTTON BEEN SELECTED? — NO

YES

S107 — GENERATE SELECTED CONTENT NOTIFICATION INDICATING THAT RESOLUTION WILL NOT BE REDUCED

END

F I G. 9

F I G.  1 0

RESOLUTION
CONVERTING PROCESS

HAS
PRINT JOB BEEN
RECEIVED?

NO

S001     YES

CALCULATE DATA AMOUNT
PER PAGE

S002

ESTIMATE THROUGHPUT
Tp1 IN RIP PROCESS

S003

$Tp1 \geqq W$?

YES

S004    NO

3

EXTRACT IMAGES HAVING
RESOLUTION THAT IS
GREATER THAN PRINTING
RESOLUTION

STORE PRINT JOB IN
PROCESSING WAITING JOB
STORAGE UNIT

S013

S005

END

HAS
IMAGE BEEN
EXTRACTED?

NO

4

S014    YES

CONVERT RESOLUTION OF
EXTRACTED IMAGES INTO
PRINTING RESOLUTION

S015

CALCULATE DATA AMOUNT
PER PAGE

ESTIMATE THROUGHPUT
Tp3 IN RIP PROCESS

S016

S017

5

F I G. 1 1

FIG12A

IMAGE 2

| D | E | F |
|---|---|---|
| 20 | 50 | 10 |
| 30 | 40 | 70 |

FIG12B

IMAGE 2

| D | E | F |
|---|---|---|
| 20 | 50 | 10 |
| 30 | 40 | 70 |

Europäisches
Patentamt

European
Patent Office

Office européen
des brevets

# EUROPEAN SEARCH REPORT

**Application Number**

EP 15 15 7151

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 0 784 289 A2 (CANON KK [JP]) 16 July 1997 (1997-07-16) * column 7, line 16 - column 13, line 6 * ----- | 1 | INV. G06K15/02 |
| Y | EP 0 474 153 A2 (CANON KK [JP]) 11 March 1992 (1992-03-11) * column 2, line 14 - column 5, line 25 * ----- | 1 | |
| Y | EP 0 657 844 A2 (CANON KK [JP]) 14 June 1995 (1995-06-14) * column 4, line 38 - column 6, line 17 * ----- | 1 | |
| A | US 2001/035970 A1 (UEDA TAKASHI [JP]) 1 November 2001 (2001-11-01) * paragraphs [0028] - [0043] * ----- | 1 | |

**TECHNICAL FIELDS SEARCHED (IPC)**

G06K

The present search report has been drawn up for all claims

| Place of search | Date of completion of the search | Examiner |
|---|---|---|
| The Hague | 20 July 2015 | Hardell, Alexander |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 15 7151

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2015

| Patent document cited in search report | | Publication date | Patent family member(s) | | Publication date |
|---|---|---|---|---|---|
| EP 0784289 | A2 | 16-07-1997 | DE | 69722472 D1 | 10-07-2003 |
| | | | EP | 0784289 A2 | 16-07-1997 |
| | | | JP | 3610142 B2 | 12-01-2005 |
| | | | JP | H09190301 A | 22-07-1997 |
| | | | US | 5748862 A | 05-05-1998 |
| EP 0474153 | A2 | 11-03-1992 | DE | 69129431 D1 | 25-06-1998 |
| | | | DE | 69129431 T2 | 05-11-1998 |
| | | | EP | 0474153 A2 | 11-03-1992 |
| | | | JP | 2562514 B2 | 11-12-1996 |
| | | | JP | H04112069 A | 14-04-1992 |
| | | | US | 5406383 A | 11-04-1995 |
| EP 0657844 | A2 | 14-06-1995 | DE | 69429972 D1 | 04-04-2002 |
| | | | DE | 69429972 T2 | 25-07-2002 |
| | | | EP | 0657844 A2 | 14-06-1995 |
| | | | ES | 2169731 T3 | 16-07-2002 |
| | | | US | 5835122 A | 10-11-1998 |
| US 2001035970 | A1 | 01-11-2001 | JP | 4069569 B2 | 02-04-2008 |
| | | | JP | 2001260491 A | 25-09-2001 |
| | | | US | 2001035970 A1 | 01-11-2001 |

EPO FORM P0459

For more details about this annex : see Official Journal of the European Patent Office, No. 12/82

**EP 2 924 615 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010277466 A